# EUROPÄISCHE PATENTSCHRIFT

(11) **EP 1 696 161 B1**
(45) Veröffentlichungstag und Bekanntmachung des Hinweises auf die Patenterteilung: **10.09.2008**
(21) Anmeldenummer: 06101036.9
(22) Anmeldetag: 30.01.2006
(51) Int. Cl.: F16K 31/02

(54) **Schiebeventil**
Gate valve
Vanne à tiroir

(30) Priorität: 25.02.2005 DE 202005003263 U
(43) Veröffentlichungstag der Anmeldung: 30.08.2006
(73) Patentinhaber: Interforge Klee GmbH, 27356 Rotenburg/Wümme (DE)
(72) Erfinder: Klee, Klaus, 27356, Rotenburg/Wümme (DE)
(74) Vertreter: Eisenführ, Speiser & Partner

(56) Entgegenhaltungen:
- GB-A- 1 308 471
- US-A- 4 592 534
- US-A- 4 771 805
- US-A- 4 824 074

## Beschreibung

Die Erfindung betrifft ein Schieberventil mit einem Ventilgehäuse mit in einer ersten gemeinsamen Achse sich gegenüber liegenden Anschlussöffnungen, und weiter mit Anschlusselementen für den Ein- und Auslass eines Fluids, mit einer Kappe auf dem Ventilgehäuse und einer mit einem Schieber gekoppelten Ventilbetätigung.

Schieberventile sind in vielfältiger Ausführung bekannt. Übliche Flachkeilschieber verfügen über ein keilförmiges Absperrorgan, dass beim Verschließen in eine keilförmige Aufnahme gepresst wird. Das Maß der Abdichtung ist dabei abhängig vom Anpressdruck. Bei geöffnetem Ventil bilden sich Ablagerungen, sog. Inkrustierungen, die sich beim Schließen des Keils sammeln und in die keilförmige Aufnahme gepresst werden. Dies kann dazu führen, dass das Ventil zunächst mit größerem Anpressdruck geschlossen werden muss, und im weiteren dazu, dass es gar nicht mehr vollständig schließt.

Dokument US-4,824,074 offenbart ein Schieberventil nach dem Oberbegriff des Anspruchs 1.

Im vorliegenden Fall besteht die Aufgabe darin, ein Schieberventil vorzustellen, bei dem sich aus dem Fluidstrom bildende Ablagerungen im Ventil nicht mehr im Ventilgehäuse sammeln und die Schließfunktion des Ventils beeinträchtigen können.

Gelöst wird diese Aufgabe dadurch, dass in dem Ventilgehäuse angeordnet sind ein hohler Käfig mit einer ersten und einer zweiten Stirnfläche, von denen die erste Stirnfläche eine Einschuböffnung aufweist, weiter mit zwei, sich gegenüberliegenden festen Seitenwänden und mit zwei parallelen, sich gegenüberliegenden freien Seitenwänden, die von zwei separaten Seitenscheiben mit im Einbauzustand in einer zweiten gemeinsamen Achse liegenden Durchgangsbohrungen gebildet sind, dass durch die Einschuböffnung des Käfigs der Schieber, der eine Durchflussöffnung aufweist, eingeführt ist und in dem Käfig und zwischen den Seitenscheiben abdichtend geführt ist und die Seitenscheiben mit ihrer jeweiligen Innenseite flächig an dem Schieber anliegen, dass der Schieber zwei Endstellungen aufweist, so dass in einer ersten, geöffneten Endstellung die Durchflussöffnung des Schiebers weitgehend oder vollständig mit dem Durchmesser der Durchgangsbohrungen der Seitenscheiben im Einbauzustand zusammenfällt und in einer zweiten, geschlossenen Endstellung die Durchflussöffnung des Schiebers vollständig außerhalb des Durchmessers der Durchgangsbohrungen der Seitenscheiben liegt. Vorteilhafte Weiterbildungen sind in den Unteransprüchen beschrieben.

Dabei wird bevorzugt, dass die Seitenscheiben sowie der Schieber aus Keramik bestehen, der Käfig aus einem Kunststoff besteht und das Ventilgehäuse, die Anschlusselemente und die Kappe aus Metallguss bestehen oder warmgepresst oder geschmiedet sind. Durch die Lagerung der Seitenscheiben in einem Kunststoffkäfig ist eine genaue Positionierung der Keramikscheiben zueinander gewährleistbar.

Weiter wird bevorzugt, dass die zweite Stirnfläche des Käfigs eine zylindrische, konkave Wölbung aufweist und die Wölbung die Verbindung der festen Seitenwänden bildet. Vorzugsweise folgen die Seitenscheiben an ihrem einen Ende der Kontur der Wölbung und sind in die freien Seitenwände des Käfigs eingeschoben.

Weiterhin sind die Seitenscheiben vorzugsweise spiegelbildlich ausgebildet und die erste gemeinsame Achse der gegenüberliegenden Anschlussöffnungen fällt im Einbauzustand mit der zweiten gemeinsamen Achse der Durchgangsbohrungen der separaten Seitenscheiben zusammen.

In einer bevorzugten Ausgestaltung weist jede der Seitenscheiben einen Vorsprung in Form einer die Durchgangsbohrung umgebenden Rippe auf, der in die Anschlussöffnungen des Ventilgehäuses oder in die darin befindlichen Anschlusselemente eingreift. Der Eingriff der separaten Seitenscheiben in die Anschlussöffnungen des Ventilgehäuses oder in die darin befindlichen Anschlusselemente ist vorzugsweise mittels Flachdichtungen und/oder O-Ringen abgedichtet. Auf diese Weise kann mittels der Flachdichtungen eine leichte Vorspannung auf die Keramikscheiben erzeugt werden, während die O-Ringe für die statische Abdichtung sorgen.

Vorzugsweise weist der Schieber ein Anschlagselement zum Begrenzen der Bewegung des Schiebers auf. In einer bevorzugten Ausgestaltung ist das Anschlagselement ein Querbalken, der aus Metallguss besteht oder warmgepresst oder geschmiedet ist und der durch eine Queröffnung im Schieber geschoben und dort gehalten ist. Mittels des Querbalkens ist eine exakte Hubbegrenzung möglich.

In einer bevorzugten Ausgestaltung ist in der ersten, geöffneten Endstellung des Schiebers ein Anschlag für die Bewegung des Schiebers von einem Vorsprung in der Kappe gebildet, an den sich der Querbalken legt, und in der zweiten, geschlossenen Endstellung des Schiebers ist ein weiterer Anschlag für die Bewegung des Schiebers von der freiliegenden oberen Fläche des Ventilgehäuses gebildet, an die sich der Querbalken legt.

In einer weiteren bevorzugten Ausgestaltung ist in der ersten, geöffneten Endstellung des Schiebers ein Anschlag für die Bewegung des Schiebers von Anschlagsstiften gebildet, die in den Querbalken geschraubt sind und auf der freiliegenden oberen Fläche des Ventilgehäuses anschlagen, und in der zweiten, geschlossenen Endstellung des Schiebers ist ein weiterer Anschlag für die Bewegung des Schiebers von einem Vorsprung in der Kappe gebildet, an den sich der Querbalken legt.

Vorzugsweise weist mindestens eine der Seitenscheiben auf der dem Schieber zugewandten Seite einen Kanal auf, der mit seinem einen Ende in die jeweilige Durchgangsbohrung der Seitenscheibe mündet und der in der zweiten geschlossenen Endstellung des Schiebers mit seinem anderen Ende in der Durchflussöffnung des Schiebers mündet.

Die Ventilbetätigung weist vorzugsweise eine Spindel auf, die in den Querbalken eingreift, und der Schieber weist vorzugsweise eine Sackbohrung zur Aufnahme der Spindel auf. Bei der Spindel handelt es sich vorzugsweise um eine Gewindespindel, die in einem Lager der Kappe axial unverschiebbar gehalten ist und die mit einem Gewindeabschnitt in den Querbalken eingeschraubt ist. Der Spalt zwischen der Spindel und dem Lager in der Kappe ist vorzugsweise mittels eines O-Ringes abgedichtet.

Mit dieser Lösung wird eine bessere Dauerabdichtung erreicht. Außerdem erlaubt diese Lösung, die Vorteile keramischer Materialien, wie z. B. Korrosionsbeständigkeit, Verschleißarmut und geringes Gewicht, zu nutzen, indem sie eine einfache Verbindung der Spindel mit dem Keramikschieber und eine exakte Lage der Endstellungen des Ventils ermöglicht. Außerdem sind die Bestandteile leicht herstellbar und durch den einfachen Aufbau für die automatengerechte, maschinelle Verarbeitung geeignet. Dies bietet zusätzlich Kostenvorteile bei der Herstellung.

Die Erfindung löst aber nicht nur die Aufgabe, sondern hat weitere Vorteile. So sind auch nach langem Nichtgebrauch die Schließkräfte des Ventils klein im Gegensatz zu herkömmlichen Ventilen, die aufgrund der Korrosion, nach langem Nichtgebrauch schwer gängig sind. Die bevorzugte Ausgestaltung mit einem Kanal in der Innenfläche einer Seitenscheibe, bietet darüber hinaus den Vorteil, dass das Ventil totwasserfrei und frostsicher ist, wenn sich der Kanal auf der Abströmseite des Ventils befindet, und der Anschlussbereich unterhalb der Durchflussöffnung liegt, so dass das Fluid aus der Durchflussöffnung abfließen kann.

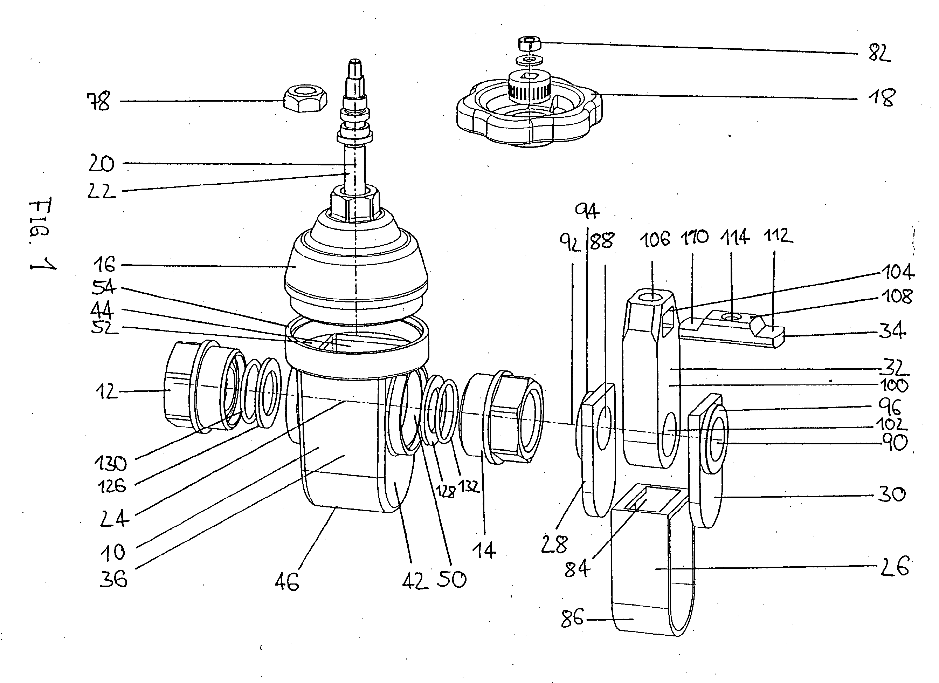

Die Erfindung ist nachstehend an Hand der Ausführungsbeispiele und unter Bezugnahme auf die Zeichnungen näher erläutert. Dort zeigen
Fig. 1 eine Explosionsdarstellung eines Ventils in einer ersten Ausführungsform;
Fig. 2a einen Längsschnitt durch ein Ventil der ersten Ausführungsform in geöffneter Stellung;
Fig. 2b einen um 90°gedrehten Längsschnitt durch das Ventil der Fig. 2a;
Fig. 3 eine Explosionsdarstellung eines Ventils einer zweiten Ausführungsform;
Fig. 4a einen Längsschnitt entsprechend Fig. 2a der zweiten Ausführungsform;
Fig. 4b einen um 90°gedrehten Längsschnitt durch das Ventil der Fig. 4a;
Fig. 5a einen der Fig. 4a entsprechenden Längsschnitt durch das Ventil in geschlossener Stellung;
Fig. 5b einen der Fig. 4b entsprechenden Längsschnitt durch das Ventil in geschlossener Stellung;

In der nachfolgenden Beschreibung der Ausführungsbeispiele beziehen sich Begriffe wie "links", "rechts", "oben", "unten", "innen", "außen", "vertikal" oder "horizontal" auf die Darstellung des Ventils in den beiliegenden Zeichnungen. Die Wahl dieser Begriffe dient allein der Erleichterung der Beschreibung und soll unter keinen Umständen als Einschränkung des Schutzes verstanden werden, denn die räumliche Einbaulage der beschriebenen Ventile ist beliebig.

Zunächst werden die Bauteile des Ventils anhand der Ausführungsbeispiele erläutert. Funktionsgleiche Bauteile sind in den Figuren gleich bezeichnet.

Das insbesondere für Flüssigkeiten bestimmte Ventil weist ein Ventilgehäuse 10, Anschlusselemente 12, 14 für den Ein- und Auslass, eine Kappe 16 auf dem Ventilgehäuse 10 sowie eine von einem Betätigungselement, beispielsweise einem Handrad 18, um eine vertikale Achse 20 verdrehbare Ventilspindel 22 auf. Die Anschlusselemente 12, 14 sind im Ausführungsbeispiel in einer gemeinsamen horizontalen Achse 24 angeordnet. Innerhalb des Ventilgehäuses befinden sich ein Käfig 26, zwei Seitenscheiben 28, 30 rechts und links des Käfigs 26, ein Schieber 32 zwischen den Seitenscheiben 28, 30 und ein Querbalken 34 in dem Schieber 32.

Das Ventilgehäuse 10, das aus Metallguss besteht oder warmgepresst oder geschmiedet ist, weist vier Seitenflächen, davon zwei sich gegenüberliegende geschlossene Seitenflächen 36, 38 und zwei sich gegenüberliegende weitere Seitenflächen 40, 42, eine obere Öffnung 44 und eine untere Stirnfläche mit einer zylindrischen, konkaven Wölbung 46, welche die geschlossenen Seitenflächen 36, 38 verbindet, auf. Die weiteren Seitenflächen 40, 42 weisen jeweils eine Anschlussöffnung 48, 50 mit einem Innengewinde auf, in welche die mit einem Außengewinde versehenen Anschlusselemente 12, 14 eingeschraubt sind. An die Seitenflächen 36, 38, 40, 42 schließt sich oben eine freiliegende Fläche 52 im Wesentlichen senkrecht zu den Seitenflächen 36, 38, 40, 42 an, die an ihrem Äußeren in einen aufragenden Flansch 54 mit Innengewinde 56 übergeht.

Die Kappe 16, die ebenfalls aus Metallguss besteht oder warmgepresst oder geschmiedet sein kann, weist im unteren Bereich einen Durchmesser und ein Außengewinde 58 passend zu dem aufragenden Flansch 54 des Ventilgehäuses 10 auf. In den Ausführungsbeispielen sind beide dort verschraubt. Auf einer bestimmten Höhe verengt sich der Durchmesser der Kappe 16, so dass im Inneren der Kappe 16 ein Vorsprung 60 ausgebildet ist. Oberhalb des Vorsprungs 60 verengt sich der Durchmesser weiter zu einer oberen Bohrung 62. Die Außenwand der Kappe 16 ist im Bereich der oberen Bohrung 62 sechskantig ausgestaltet, so dass sie mittels eines Schraubenschlüssels mit dem Ventilgehäuse 10 verschraubt werden kann.

Die Spindel 22, die ebenfalls aus Metallguss besteht oder warmgepresst oder geschmiedet ist, umfasst von unten nach oben betrachtet, einen Gewindeabschnitt 64, einen Ringflansch 66, einen zylindrischen Dichtabschnitt 68 mit einer Nut70, einen weiteren Gewindebereich 72 sowie einen Anschlussabschnitt 74, der von seinem freien Ende ausgehend zumindest teilweise mit einem Gewinde 76 versehen ist. Der Ringflansch 66 verhindert eine Bewegung der Spindel 22, die von unten durch die Bohrung 62 geführt wird, nach oben aus der Kappe 16. Eine Bewegung der Spindel 22 nach unten aus der Kappe 16 wird durch eine Mutter 78, die auf den Gewindebereich 72 geschraubt ist, verhindert. Der Dichtabschnitt 68 ist somit in der Bohrung 62 der Kappe 16 axial unverschiebbar geführt. In der Nut 70 ist ein O-Ring 80 zur Abdichtung angeordnet.

Zum Drehen der Spindel 22 ist im Ausführungsbeispiel von oben auf die Spindel ein Handrad 18 aufgesetzt und mit einer Mutter82, die auf das Gewinde 76 geschraubt ist, fixiert.

Der hohle Käfig 26 besteht aus Kunststoff und endet im ersten Ausführungsbeispiel im Einbauzustand unterhalb der freiliegenden Fläche 52 des Ventilgehäuses 10. Im zweiten Ausführungsbeispiel ragt der Käfig 26 im Einbauzustand in die Kappe 16 hinein, aber nicht weiter, als die Länge der weiter unten beschriebenen Anschlagstifte 120, 122 im zweiten Ausführungsbeispiel. Der Käfig 26 hat zwei Stirnflächen, von denen die obere Stirnfläche eine Einschuböffnung 84 und die untere Stirnfläche eine zylindrische, konkave Wölbung 86 aufweist. Weiter hat der Käfig 26 zwei sich gegenüberliegende feste Seitenwände, die durch die Wölbung 86 verbunden sind. Weiterhin umfasst der Käfig 26 zwei parallele, sich gegenüberliegende freie Seitenwände, die mindestens teilweise von zwei separaten Seitenscheiben 28, 30gebildet sind.

Die Seitenscheiben 28, 30 bestehen aus Keramik und weisen im ersten Ausführungsbeispiel vollständig die Kontur der freien Seitenwände des Käfigs 26 auf. Im zweiten Ausführungsbeispiel weisen die Seitenscheiben 28, 30 nicht vollständig die Kontur der freien Seitenwände des Käfigs auf, sondern enden im Einbauzustand unterhalb der Anschlussöffnungen 48, 50 des Ventilgehäuses 10.

Die Seitenscheiben 28, 30 sind in die freien Seitenwände des Käfigs von der Seite her eingeschoben. Ihre sich gegenüberliegenden ebenen Flächen sind geschliffen und poliert. Weiterhin sind die Seitenscheiben 28, 30 spiegelbildlich ausgebildet und weisen jeweils eine Durchgangsbohrung 88, 90 mit einer im Einbauzustand gemeinsamen horizontalen Achse 92. Jede der Seitenscheiben 28, 30 weist einen Vorsprung 94, 96 in Form einer die Durchgangsbohrung 88, 90 umgebenden Rippe auf.

Der Schieber 32, der ebenfalls aus Keramik besteht, weist eine längliche, scheibenförmige Gestalt auf und hat zwei beabstandete, parallele und ebene Seitenflächen 98, 100, die geschliffen und poliert sind. Die Seitenflächen 98, 100 kontaktieren die sich im Käfig 26 gegenüberliegenden Oberflächen der Seitenscheiben 28, 30 abdichtend. Im Übrigen ist der Schieber 32 an die inneren Konturen des Käfigs 26 angepasst. Der Schieber 32 weist außerdem eine sich zwischen den Seitenflächen erstreckende Durchflussöffnung 102 auf, deren Form und Durchmesser den Durchgangsbohrungen 88, 90 der Seitenscheiben 28, 30 entspricht. Im oberen Bereich weist der Schieber 32 eine Queröffnung 104 zur Aufnahme des Querbalkens 34 auf und eine Sackbohrung 106 zur Aufnahme der Spindel 22.

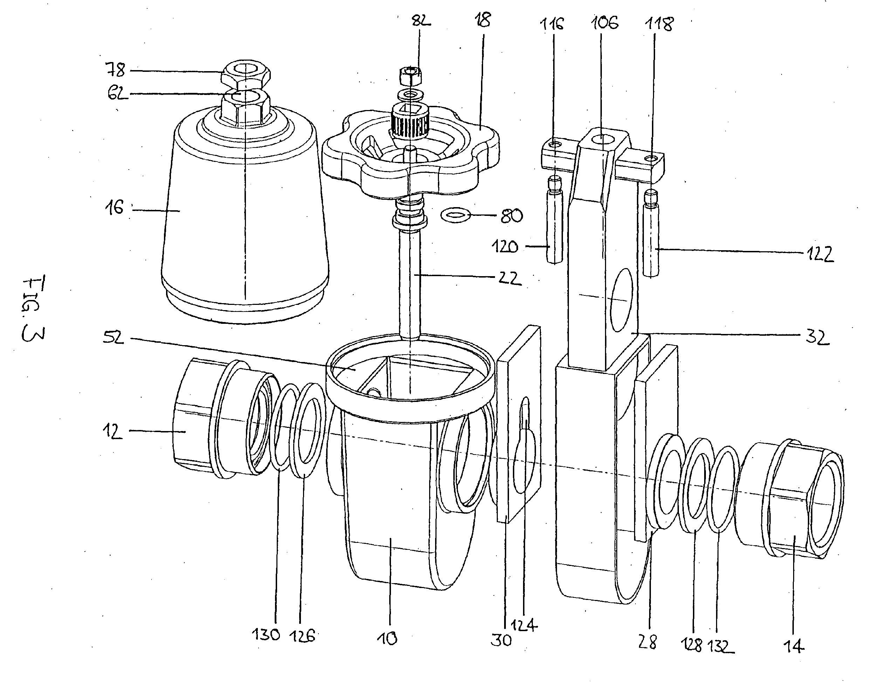

Der Querbalken 34, der aus Metallguss besteht oder warmgepresst oder geschmiedet sein kann, hat im Ausführungsbeispiel einen viereckigen Querschnitt mit einem im Querschnitt etwa quadratischen Mittelteil 108 und zwei abgeflachten Enden 110, 112. Der Querschnitt des Mittelteils 108 ist an den Querschnitt der Queröffnung 104 des Schiebers 32 angepasst. Weiterhin weist der Querbalken 34 in seinem Mittelteil 108 eine senkrechte Gewindebohrung 114 auf. In einem zweiten Ausführungsbeispiel (Fig. 3 bis 5) weist der Querbalken 34 zusätzlich in jedem seiner Enden 110, 112 eine zur Gewindebohrung 114 parallele Gewindebohrung 116, 118 auf.

Weiterhin sind im zweiten Ausführungsbeispiel zusätzlich zylindrische Anschlagsstifte 120, 122 senkrecht zu der freiliegenden oberen Fläche 52 des Ventilgehäuses 10 vorgesehen. Die Anschlagstifte 120, 122 weisen an ihrem oberen Ende ein Außengewinde auf, mit dem sie in die Gewindebohrungen 116, 118 des Querbalkens 34 eingeschraubt sind.

Außerdem weist im zweiten Ausführungsbeispiel eine der Seitenscheiben 28, 30 zusätzlich in ihrer dem Schieber 32 zugewandten Oberfläche einen Kanal 124 in Form einer Nut auf, der mit seinem einen Ende in die Durchgangsbohrung 88, 90 der Seitenscheibe 30 mündet und von der Mündungsstelle in Bewegungsrichtung des Schiebers 32 bis in einen Bereich der Seitenscheibe 30 verläuft, welcher sich bei geschlossenem Ventil dort befindet, wo sich die Durchflussöffnung 102 des Schiebers 32 befindet.

Im Folgenden wird nun die Funktionsweise des Ventils anhand der Ausführungsbeispiele erläutert.

Der Käfig 26 und die in seine freien Seitenwände eingeschobenen Seitenscheiben 28, 30 sind innerhalb des Ventilgehäuses 10 so angeordnet, dass die im Einbauzustand gemeinsame horizontale Achse 92 der Durchgangsbohrungen 88, 90 der Seitenscheiben 28, 30 im Einbauzustand mit der horizontalen Achse 24 der Anschlusselemente 12, 14 und der Anschlussöffnungen 48, 50 zusammenfällt. Der Vorsprung 94, 96 jeder der Seitenscheiben 28, 30 greift in die Anschlusselemente 12, 14 ein und die Abdichtung der Verbindung zwischen den Seitenscheiben 28, 30 und den Anschlusselementen 12, 14 ist mittels Flachdichtungen 126, 128 und O-Ringen 130, 132 sicher gestellt. In einem nicht dargestellten Ausführungsbeispiel können Flachdichtungen oder O-Ringe verwendet werden.

Der Schieber 32 ist durch die Einschuböffnung 84 des Käfigs 26 in diesen eingeführt und zwischen den festen Seitenwänden des Käfigs 26 und den Seitenscheiben 28, 30 flächig anliegend und abdichtend geführt.

Der Querbalken 34 ist durch die Queröffnung 104 des Schiebers 32 geschoben und dort gehalten, so dass die Gewindebohrung 114 im Mittelteil 108 des Querbalkens 34 mit der Sackbohrung 106 des Schiebers 32 zur Aufnahme der Spindel 22 in einer Achse liegt. In die Gewindebohrung 114 des Querbalkens 34 greift die Spindel 22 mit ihrem Gewindeabschnitt 64 ein.

Durch Drehen der axial unverschiebbaren Spindel 22 wandert der Querbalken 34 auf dem Gewindeabschnitt 64 der Spindel 22 auf und ab und nimmt den Schieber 32 mit. Dadurch ist der Schieber 32 nun auf und ab bewegbar. Die Bewegung des Schiebers 32 ist durch zwei Endstellungen, die durch Anschläge festgelegt sind, begrenzt. In einer ersten, geöffneten Endstellung deckt sich die Durchflussöffnung 102 des Schiebers 32 vollständig mit den Durchgangsbohrungen 88, 90 der Seitenscheiben 28, 30. In einer zweiten, geschlossenen Endstellung liegt die Durchflussöffnung 102 des Schiebers 32 vollständig außerhalb des Bereiches der Durchgangsbohrungen 88, 90 der Seitenscheiben 28,30.

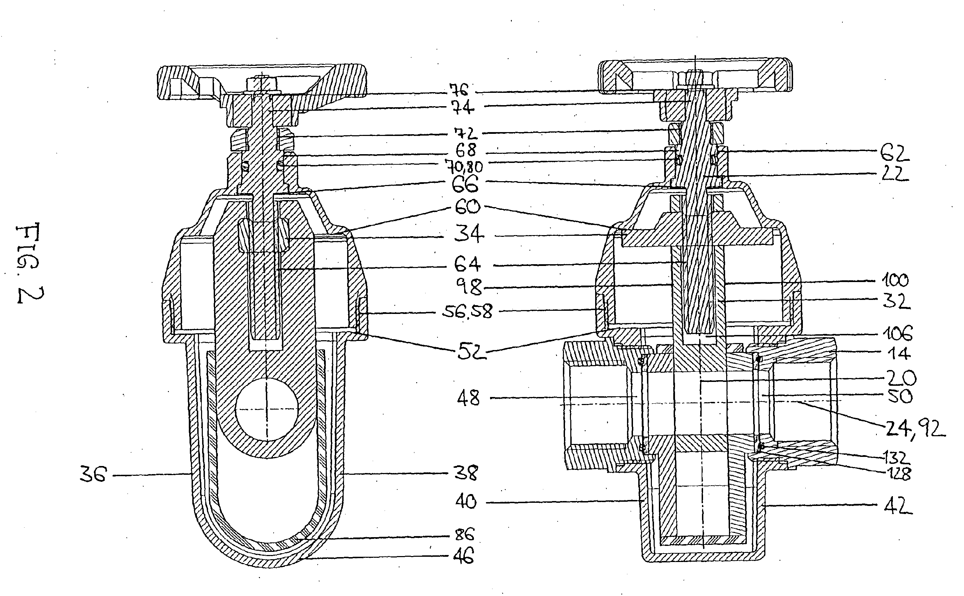

Im ersten Ausführungsbeispiel ist die erste, geöffnete Endstellung des Schiebers 32 (Fig. 2) dadurch festgelegt, dass sich der Querbalken 34 an den Vorsprung 60 in der Kappe 16 legt. Die zweite, geschlossene Endstellung des Schiebers 32 ist im ersten Ausführungsbeispiel dadurch definiert, dass der Querbalken 34 sich an die freiliegende obere Fläche 52 des Ventilgehäuses 10 legt.

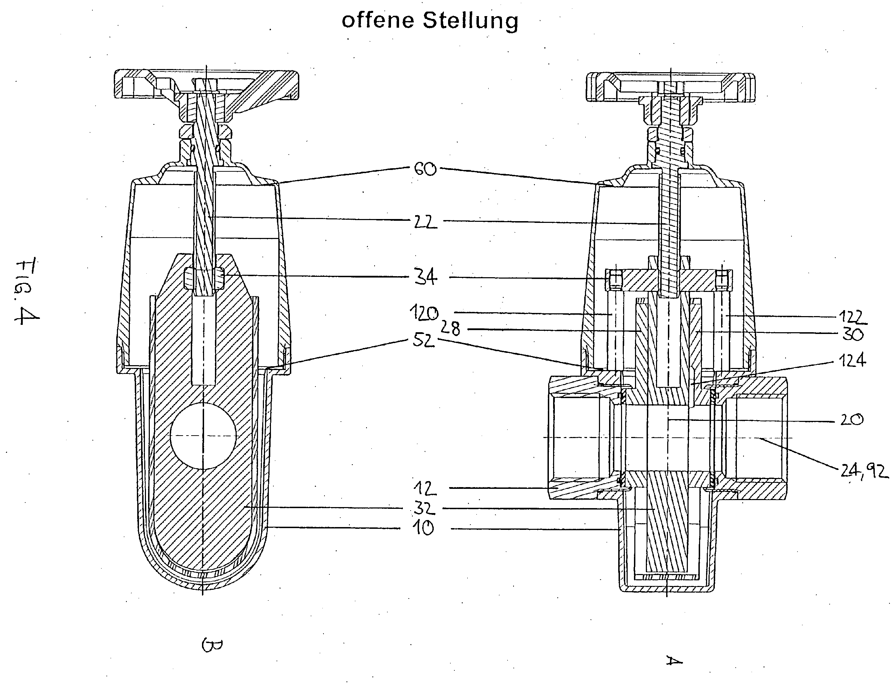

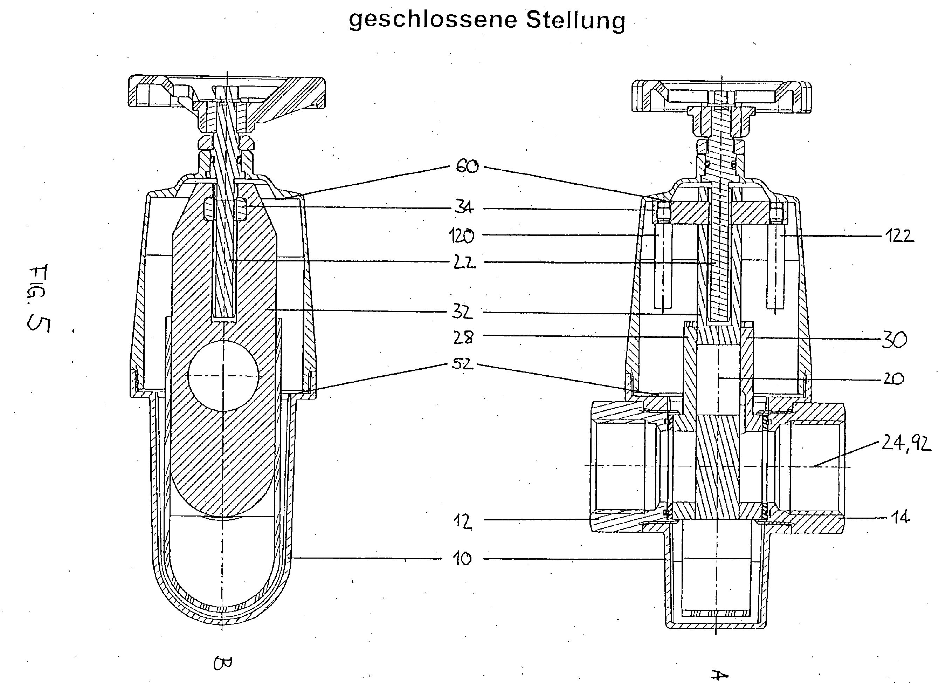

Im zweiten Ausführungsbeispiel ist die erste, geöffnete Endstellung des Schiebers 32 (Fig. 4) dadurch festgelegt, dass die Anschlagsstifte 120, 122, die in den Querbalken 34 eingeschraubt sind, auf der freiliegenden oberen Fläche 52 des Ventilgehäuses 10 anschlagen. Die zweite, geschlossene Endstellung des Schiebers 32 (Fig. 5) ist im zweiten Ausführungsbeispiel dadurch definiert, dass sich der Querbalken 34 an den Vorsprung 60 in der Kappe 16 legt.

Im zweiten Ausführungsbeispiel ist das Ventil also geschlossen, wenn der Querbalken 34 am oberen Anschlag 60 anliegt. In dieser Stellung verbindet der oben erwähnte Kanal 124 den Totraum der Durchflussöffnung 102 des Schiebers 32 mit einem der Anschlussbereiche (Durchgangsbohrung 88, 90 und Anschlusselemente 12, 14) des Ventils. Vorausgesetzt, dass sich der Kanal 124 auf der Abströmseite des Ventils befindet, und der Anschlussbereich unterhalb der Durchflussöffnung 102 liegt, kann das Fluid aus der Durchflussöffnung 102 abfließen. Totwasser im Ventil und Frostgefahr werden dadurch vermieden.

Durch die Erfindung wurde also erreicht, ein kostengünstig, automatisch herstellbares Ventil zu schaffen, dass korrosionsbeständig, somit auch nach langem Nichtgebrauch leichtgängig, und ggf. totwasserfrei und frostsicher ist und eine exakte Hubbegrenzung aufweist.

## Patentansprüche

1. Schieberventil mit einem Ventilgehäuse (10)
- mit in einer ersten gemeinsamen Achse (24) sich gegenüber liegenden Anschlussöffnungen (48, 50),
- mit Anschlusselementen (12, 14) für den Ein- und Auslass eines Fluids,
- mit einer Kappe (16) auf dem Ventilgehäuse (10), und
- einer mit einem Schieber (32) gekoppelten Ventilbetätigung,
wobei in dem Ventilgehäuse (10) ein hohler Käfig (26) angeordnet ist,
- mit einer ersten und einer zweiten Stirnfläche, von denen die erste Stirnfläche eine Einschuböffnung (84) aufweist, durch welche der Schieber (32), der eine Durchflussöffnung (102) aufweist, eingeführt ist
- mit zwei, sich gegenüberliegenden festen Seitenwänden und
- mit zwei parallelen, sich gegenüberliegenden freien Seitenwänden,
wobei der Schieber (32) zwei Endstellungen aufweist, so dass
- in einer ersten, geöffneten Endstellung die Durchflussöffnung (102) des Schiebers weitgehend oder vollständig mit dem Durchmesser von Durchgangsbohrungen (88, 90) in den freien Seitenwänden (28, 30) im Einbauzustand zusammenfällt und
- in einer zweiten, geschlossenen Endstellung die Durchflussöffnung (102) des Schiebers (32) vollständig außerhalb des Durchmessers dieser Durchgangsbohrungen (88, 90) liegt,
**dadurch gekennzeichnet, dass** die freien Seitenwände von zwei separaten Seitenscheiben (28, 30) mit den im Einbauzustand in einer zweiten gemeinsamen Achse (92) liegenden Durchgangsbohrungen (88, 90) gebildet sind und der Schieber in dem Käfig und zwischen den Seitenscheiben (28, 30) abdichtend geführt ist und die Seitenscheiben (28, 30) mit ihrer jeweiligen Innenseite flächig an dem Schieber (32) anliegen.

2. Schieberventil nach Anspruch 1, **dadurch gekennzeichnet, dass** die Seitenscheiben (28, 30) und der Schieber (32) aus Keramik bestehen und deren sich berührende Oberflächen poliert sind.

3. Schieberventil nach einem der vorstehenden Ansprüche, **dadurch gekennzeichnet, dass** der Käfig (26) aus einem Kunststoff besteht.

4. Schieberventil nach einem der vorstehenden Ansprüche, **dadurch gekennzeichnet, dass** das Ventilgehäuse (10), die Anschlusselemente (12, 14) und die Kappe (16) aus Metallguss bestehen oder warmgepresst oder geschmiedet sind.

5. Schieberventil nach einem der vorstehenden Ansprüche, **dadurch gekennzeichnet, dass** die zweite Stirnfläche des Käfigs eine zylindrische, konkave Wölbung (86) aufweist und die Wölbung (86) die Verbindung der festen Seitenwände bildet.

6. Schieberventil nach Anspruch 5**, dadurch gekennzeichnet, dass** die Seitenscheiben (28, 30) an ihrem einen Ende der Kontur der Wölbung folgen.

7. Schieberventil nach einem der vorstehenden Ansprüche, **dadurch gekennzeichnet, dass** die separaten Seitenscheiben (28, 30) in die freien Seitenwände des Käfigs eingeschoben sind.

8. Schieberventil nach einem der vorstehenden Ansprüche, **dadurch gekennzeichnet, dass** die Seitenscheiben (28, 30) spiegelbildlich ausgebildet sind und die erste gemeinsame Achse (24) der gegenüberliegenden Anschlussöffnungen (48, 50) im Einbauzustand mit der zweiten gemeinsamen Achse (92) ) der Durchgangsbohrungen (88, 90) der separaten Seitenscheiben (28, 30) zusammenfällt.

9. Schieberventil nach einem der vorstehenden Ansprüche, **dadurch gekennzeichnet, dass** jede separate Seitenscheibe (28, 30) einen Vorsprung (94, 96) in Form einer die Durchgangsbohrung (88, 90) umgebenden Rippe aufweist, der in die Anschlussöffnungen (48, 50) des Ventilgehäuses (10) oder in die darin befindlichen Anschlusselemente (12, 14) eingreift.

10. Schieberventil nach einem der vorstehenden Ansprüche, **dadurch gekennzeichnet, dass** der Eingriff der separaten Seitenscheiben (28, 30) in die Anschlussöffnungen (48, 50) des Ventilgehäuses (10) oder in die darin befindlichen Anschlusselemente (12, 14) mittels Flachdichtungen (126, 128) und/oder O-Ringen (130, 132) abgedichtet ist.

11. Schieberventil nach einem der vorstehenden Ansprüche, **dadurch gekennzeichnet, dass** der Schieber (32) ein Anschlagselement zum Begrenzen der Bewegung des Schiebers aufweist.

12. Schieberventil nach Anspruch 11, **dadurch gekennzeichnet, dass** das Anschlagselement ein Querbalken (34) ist, der durch eine Queröffnung (104) im Schieber (34) geschoben und dort gehalten ist.

13. Schieberventil nach Anspruch 11, **dadurch gekennzeichnet, dass** der Querbalken (34) aus Metallguss besteht oder warmgepresst oder geschmiedet ist.

14. Schieberventil mindestens nach Anspruch 1 oder 13, **dadurch gekennzeichnet, dass** in der ersten, geöffneten Endstellung des Schiebers (32) ein Anschlag für die Bewegung des Schiebers (32) von einem Vorsprung (60) in der Kappe (16) gebildet ist, an den sich der Querbalken (34) legt, und dass in der zweiten, geschlossenen Endstellung des Schiebers (32) ein weiterer Anschlag (52) für die Bewegung des Schiebers (32) von der freiliegende obere Fläche (52) des Ventilgehäuses (10) gebildet ist, an die sich der Querbalken (34) legt.

15. Schieberventil mindestens nach Anspruch 1 oder 13, **dadurch gekennzeichnet, dass** in der ersten, geöffneten Endstellung des Schiebers (32) ein Anschlag für die Bewegung des Schiebers (32) von Anschlagsstiften (120, 122) gebildet ist, die in den Querbalken (34) geschraubt sind und auf der freiliegenden oberen Fläche des Ventilgehäuses (10) anschlagen, und dass in der zweiten, geschlossenen Endstellung des Schiebers (32) ein weiterer Anschlag für die Bewegung des Schiebers (32) von einem Vorsprung (60) in der Kappe (16) gebildet ist, an den sich der Querbalken (34) legt.

16. Schieberventil mindestens nach Anspruch 15, **dadurch gekennzeichnet, dass** mindestens eine der Seitenscheiben (28, 30) auf der dem Schieber (32) zugewandten Seite einen Kanal (124) aufweist, der mit seinem einen Ende in die jeweilige Durchgangsbohrung (88, 90) der Seitenscheibe (28, 30) mündet und der in der zweiten geschlossenen Endstellung des Schiebers (32) mit seinem anderen Ende in der Durchflussöffnung (102) des Schiebers (32) mündet.

17. Schieberventil mindestens nach Anspruch 1, bei dem die Ventilbetätigung eine Spindel (22) aufweist, **dadurch gekennzeichnet, dass** die Spindel (22) in den Querbalken (34) eingreift, und dass der Schieber (32) eine Sackbohrung (106) zur Aufnahme der Spindel (22) aufweist.

18. Schieberventil nach Anspruch 17, **dadurch gekennzeichnet, dass** die Spindel (22) eine Gewindespindel und in einem Lager der Kappe (16) axial unverschiebbar gehalten ist und dass ein Gewindeabschnitt (64) der Spindel (22) in den Querbalken (34) eingeschraubt ist.

19. Schieberventil nach Anspruch 1, **dadurch gekennzeichnet, dass** der Spalt zwischen der Spindel (22) und dem Lager in der Kappe (16) mittels O-Ring (80) abgedichtet ist.

## Claims

1. Gate valve comprising a valve housing (10)
- with connection openings (48, 50) disposed in mutually opposite relationship on a first common axis (24),
- with connection elements (12, 14) for admitting and discharging a fluid,
- with a cap (16) on the valve housing (10) and
- a valve actuation means coupled to a sliding gate (32),
wherein arranged in the valve housing (10) is a hollow cage (26)
- having a first and a second end face of which the first end face has an insertion opening (84), through which the sliding gate (32), which has a through-flow opening (102) is inserted
- with two mutually oppositely disposed fixed side walls and
- with two parallel mutually oppositely disposed free side walls,
wherein the sliding gate (32) has two end positions so that
- in a first opened end position the through-flow opening (102) of the sliding gate in the installed condition coincides substantially or completely with the diameter of through bores (88, 90) in the free side walls (28, 30) and
- in a second closed end position the through-flow opening (102) of the sliding gate (32) lies completely outside the diameter of these through bores, **characterized in that** the free side walls of two separate side plates (28, 30) are formed with the through bores (88, 90) which in the installed condition are on a second common axis (92) and the sliding gate is guided in a sealing manner in the cage and between the side plates (28, 30) and the side plates (28, 30) bear with their respective inward side in surface contact against the sliding gate (32).

2. Gate valve according to Claim 1 **characterised in that** the side plates (28, 30) and the sliding gate (32) consist of ceramic and the mutually touching surfaces thereof are polished.

3. Gate valve according to any one of the preceding claims, **characterized in that** the cage (26) consists of a plastic material.

4. Gate valve according to any one of the preceding claims, **characterized in that** the valve housing (10), the connection elements (12, 14) and the cap (16) consist of cast metal or are hot-pressed or forged.

5. Gate valve according to any one of the preceding claims, **characterized in that** the second end face of the cage has a cylindrical concave curvature (86) and the curvature (86) forms the connection of the fixed side walls.

6. Gate valve according to Claim 5, **characterized in that** the side plates (28, 30) at their one end follow the contour of the curvature.

7. Gate valve according to any one of the preceding claims, **characterized in that** the separate side plates (28, 30) are inserted into the free side walls of the cage.

8. Gate valve according to any one of the preceding claims, **characterized in that** the side plates (28, 30) are of a mirror-image configuration and the first common axis (24) of the mutually oppositely disposed connection openings (48, 50), in the installed condition, coincides with the second common axis (92) of the through bores (88, 90) in the separate side plates (28, 30).

9. Gate valve according to any one of the preceding claims, **characterized in that** each separate side plate (28, 30) has a projection (94, 96) in the form of a rib which extends around the through bore (88, 90) and which engages into the connection openings (48, 50) of the valve housing (10) or into the connection elements (12, 14) disposed therein.

10. Gate valve according to any one of the preceding claims, **characterized in that** the engagement of the separate side plates (28, 30) into the connection openings (48, 50) of the valve housing (10) or into the connection elements (12, 14) disposed therein is sealed off by flat seals (126, 128) and/or O-rings (130, 132).

11. Gate valve according to any one of the preceding claims, **characterized in that** the sliding gate (32) has an abutment element for limiting the movement of the sliding gate.

12. Gate valve according to Claim 11, **characterized in that** the abutment element is a transverse bar (34), which is pushed through a transverse opening (104) in the sliding gate (32) and held there.

13. Gate valve according to Claim 11, **characterized in that** the transverse bar (34) consists of cast metal or is hot-pressed or forged.

14. Gate valve at least according to Claim 1 or 13, **characterized in that** in the first opened end position of the sliding gate (32) an abutment for the movement of the sliding gate (32) is formed by a projection (60) in the cap (16), against which projection the transverse bar (34) bears, and **in that** in the second closed end position of the sliding gate (32) a further abutment (52) for the movement of the sliding gate (32) is formed by the exposed upper face (52) of the valve housing (10), against which the transverse bar (34) bears.

15. Gate valve at least according to Claim 1 or 13, **characterized in that** in the first opened end position of the sliding gate (32) an abutment for the movement of the sliding gate (32) is formed by abutment pins (120, 122) which are screwed into the transverse bar (34) and which butt against the exposed upper face of the valve housing (10), and **in that** in the second closed end position of the sliding gate (32) a further abutment for the movement of the sliding gate (32) is formed by a projection (60) in the cap (16), against which projection (60) the transverse bar (34) bears.

16. Gate valve at least according to Claim 15, **characterized in that** at least one of the side plates (28, 30) on the side turned towards the sliding gate (32) has a passage (124) which with its one end opens into the respective through bore (88, 90) of the side plate and which in the second closed end position of the sliding gate (32) opens with its other end in the through-flow opening (102) of the sliding gate (32).

17. Gate valve at least according to Claim 1, in which the valve actuation means has a spindle (22), **characterized in that** the spindle (22) engages into the transverse bar (34), and **in that** the sliding gate (32) has a blind bore (106) for receiving the spindle (22).

18. Gate valve according to Claim 17, **characterized in that** the spindle (22) is a threaded spindle and is held axially immovably in a bearing of the cap (16), and **in that** a threaded portion (64) of the spindle (22) is screwed into the transverse bar (34).

19. Gate valve according to Claim 1, **characterized in that** the gap between the spindle (22) and the bearing in the cap (16) is sealed off by an O-ring (80).

## Revendications

1. Vanne à tiroir avec un boîtier de vanne (10)
- avec des ouvertures de raccordement (48, 50) opposées se trouvant sur un premier axe commun (24),
- avec des éléments de raccordement (12, 14) pour l'entrée et la sortie d'un fluide,
- avec un couvercle (16) sur le boîtier de vanne (10), et
- un actionnement de vanne couplé à un tiroir (32),
dans laquelle une cage creuse (26) est disposée dans le boîtier de vanne (10),
- avec une première et une deuxième surface frontale dont la première surface frontale présente une ouverture d'insertion (84) par laquelle le tiroir (32), qui présente une ouverture d'écoulement (102), est introduit,
- avec deux parois latérales opposées fixes, et
- avec deux parois latérales parallèles opposées libres,
dans laquelle le tiroir (32) présentant deux positions terminales, de sorte que
- dans une première position terminale ouverte, l'ouverture d'écoulement (102) du tiroir coïncide largement ou complètement, à l'état monté, avec le diamètre des orifices de passage (88, 90) dans les parois latérales libres (28, 30) et
- dans une deuxième position terminale fermée, l'ouverture d'écoulement (102) du tiroir (32) se trouve complètement en dehors du diamètre de ces orifices de passage (88, 90),
**caractérisée en ce que** les parois latérales libres de deux plaques latérales (28, 30) séparées sont formées avec les orifices de passage (88, 90) se trouvant, à l'état monté, sur un deuxième axe commun (92) et le tiroir est guidé de manière étanche dans la cage et entre les plaques latérales (28, 30) et les plaques latérales (28, 30) reposent à plat contre le tiroir (32) avec leur côté intérieur respectif.

2. Vanne à tiroir selon la revendication 1, **caractérisée en ce que** les plaques latérales (28, 30) et le tiroir (32) sont constitués de céramique et leurs surfaces se touchant sont polies.

3. Vanne à tiroir selon l'une des revendications précédentes, **caractérisée en ce que** la cage (26) est constituée d'une matière synthétique.

4. Vanne à tiroir selon l'une des revendications précédentes, **caractérisée en ce que** le boîtier de vanne (10) les éléments de raccordement (12, 14) et le couvercle (16) sont constitués de fonte métallique ou estampés à chaud ou forgés.

5. Vanne à tiroir selon l'une des revendications précédentes, **caractérisée en ce que** la deuxième surface frontale de la cage présente une courbure cylindrique concave (86) et la courbure (86) forme la liaison des parois latérales fixes.

6. Vanne à tiroir selon la revendication 5, **caractérisée en ce que** les plaques latérales (28, 30) suivent à une de leurs extrémités le contour de la courbure.

7. Vanne à tiroir selon l'une des revendications précédentes, **caractérisée en ce que** les plaques latérales (28, 30) séparées sont insérées dans les parois latérales libres de la cage.

8. Vanne à tiroir selon l'une des revendications précédentes, **caractérisée en ce que** les plaques latérales (28, 30) sont configurées en miroir et le premier axe commun (24) des ouvertures de raccordement (48, 50) opposées coïncident, à l'état monté, avec le deuxième axe commun (92) des orifices de passage (88, 90) des plaques latérales (28, 30) séparées.

9. Vanne à tiroir selon l'une des revendications précédentes, **caractérisée en ce que** chaque plaque latérale (28, 30) séparée présente une saillie (94, 96) en forme de nervure qui entoure l'orifice de passage (88, 90) et qui s'engage dans l'ouverture de raccordement (48, 50) du boîtier de vanne (10) ou dans les éléments de raccordement (12, 14) s'y trouvant.

10. Vanne à tiroir selon l'une des revendications précédentes, **caractérisée en ce que** l'engagement des plaques latérales (28, 30) séparées dans les ouvertures de raccordement (48, 50) du boîtier de vanne (10) ou dans les éléments de raccordement (12, 14) s'y trouvant est rendu étanche au moyen de joints d'étanchéité plats (126, 128) et / ou de joints toriques (130, 132).

11. Vanne à tiroir selon l'une des revendications précédentes, **caractérisée en ce que** le tiroir (32) présente un élément de butée pour limiter le mouvement du tiroir.

12. Vanne à tiroir selon la revendication 11, **caractérisée en ce que** l'élément de butée est une traverse (34) qui est insérée dans le tiroir (34) par une ouverture transversale (104) et y est maintenue.

13. Vanne à tiroir selon la revendication 11, **caractérisée en ce que** la traverse (34) est constituée de fonte métallique ou estampée à chaud ou forgée.

14. Vanne à tiroir au moins selon la revendication 1 ou 13, **caractérisée en ce que** dans la première position terminale ouverte du tiroir (32), une butée pour le mouvement du tiroir (32) est formée par une saillie (60) dans le couvercle (16) contre laquelle la traverse (34) se place et **en ce que** dans la deuxième position terminale fermée du tiroir (32), une autre butée (52) pour le mouvement du tiroir (32) est formée par la surface supérieure libre (52) du boîtier de vanne (10) contre laquelle la traverse (34) se place.

15. Vanne à tiroir au moins selon la revendication 1 ou 13, **caractérisée en ce que** dans la première position terminale ouverte du tiroir (32), une butée pour le mouvement du tiroir (32) est formée par des goupilles de butée (120, 122) qui sont vissées dans la traverse (34) et butent contre la surface supérieure libre du boîtier de vanne (10), et **en ce que** dans la deuxième position terminale fermée du tiroir (32), une autre butée pour le mouvement du tiroir (32) est formée par une saillie (60) dans le couvercle (16) contre laquelle la traverse (34) se place.

16. Vanne à tiroir au moins selon la revendication 15, **caractérisée en ce qu'**au moins une des plaques latérales (28, 30) présente, sur le côté orienté vers le tiroir (32), un canal qui débouche avec une de ses extrémités dans l'orifice de passage (88, 90) concerné de la plaque latérale (28, 30) et qui débouche, dans la deuxième position terminale fermée du tiroir (32), avec son autre extrémité dans l'ouverture d'écoulement (102) du tiroir (32).

17. Vanne à tiroir au moins selon la revendication 1 dans laquelle l'actionnement de vanne présente une broche (22) **caractérisée en ce que** la broche (22) s'engage dans la traverse (34), et **en ce que** le tiroir (32) présente un trou borgne (106) pour recevoir la broche (22).

18. Vanne à tiroir au moins selon la revendication 17, **caractérisée en ce que** la broche (22) est une broche filetée et est maintenue de manière axialement fixe dans un palier du couvercle (16) et **en ce qu'**une partie filetée (64) de la broche (22) est vissée dans la traverse (34).

19. Vanne à tiroir au moins selon la revendication 1, **caractérisée en ce que** la fente entre la broche (22) et le palier dans le couvercle (16) est rendue étanche au moyen d'un joint torique (80).
